# EUROPÄISCHE PATENTSCHRIFT

(11) **EP 2 621 855 B1**
(45) Veröffentlichungstag und Bekanntmachung des Hinweises auf die Patenterteilung: **03.06.2015**
(21) Anmeldenummer: 11761382.8
(22) Anmeldetag: 27.09.2011
(51) Int. Cl.: C01B 21/14, C01B 5/00, C01B 3/50, B01D 53/22, H01M 8/06

(54) **VERFAHREN ZUR AUFARBEITUNG EINES ABGASES AUS EINER ANLAGE ZUR HERSTELLUNG VON HYDROXYLAMIN ODER HYDROXYLAMMONIUM-SALZEN**
PROCESS FOR WORKING UP AN EXHAUST GAS FROM A SYSTEM FOR PRODUCING HYDROXYLAMINE OR HYDROXYLAMMONIUM SALTS
PROCÉDÉ DE RETRAITEMENT D'UN EFFLUENT GAZEUX PROVENANT D'UNE INSTALLATION DE PRODUCTION D'HYDROXYLAMINE OU DE SELS D'HYDROXYLAMMONIUM

(30) Priorität: 30.09.2010 US 388019 P; 30.09.2010 EP 10184335
(43) Veröffentlichungstag der Anmeldung: 07.08.2013
(73) Patentinhaber: BASF SE, 67056 Ludwigshafen (DE)
(72) Erfinder: GARSUCH, Arnd, 67063 Ludwigshafen (DE); PANCHENKO, Alexander, 67071 Ludwigshafen (DE); BRÄUNINGER, Sigmar, 69502 Hemsbach (DE); SCHEIDEL, Jens, 69493 Hirschberg (DE); THOME, Alfred, 67346 Speyer (DE)
(86) Internationale Anmeldenummer: PCT/EP2011/066781
(87) Internationale Veröffentlichungsnummer: WO 2012/041859

(56) Entgegenhaltungen:
- EP-A1- 1 275 616
- WO-A1-02/30549
- KR-A- 20070 109 477
- LEE H K ET AL: "Hydrogen separation using electrochemical method", JOURNAL OF POWER SOURCES, ELSEVIER SA, CH, Bd. 132, Nr. 1-2, 20. Mai 2004 (2004-05-20), Seiten 92-98, XP004504603, ISSN: 0378-7753, DOI: 10.1016/J.JPOWSOUR.2003.12.056

## Beschreibung

Die vorliegende Erfindung betrifft ein Verfahren zur Aufarbeitung eines Abgases aus einer Anlage zur Herstellung von Hydroxylamin oder Hydroxylammonium-Salzen, wobei mindestens ein Teil des im Abgas A enthalten Wasserstoffs mittels einer gasdichten Membran-Elektroden-Assembly elektrochemisch abgetrennt wird.

Bei der Herstellung von Hydroxylamin oder Hydroxylammonium-Salzen durch katalytische Hydrierung von Stickstoffmonoxid mit Wasserstoff entstehend unter anderem Distickstoffmonoxid, Stickstoff und Ammoniak als Nebenprodukte. Hierbei wird Wasserstoff in großen Überschuss eingesetzt und das Stickstoffmonoxid nur teilweise umgesetzt. Man erhält Abgase, die Wasserstoff, Stickstoffmonoxid, Distickstoffmonoxid und gegebenenfalls Inerte enthalten. Diese Abgasgemische können nicht unmittelbar in die Synthese rezykliert werden, da es sonst zur Aufpegelung des Distickstoffmonoxids und zur Bildung von explosionsfähigen Gemischen aus Wasserstoff, Stickstoffmonoxid und Distickstoffmonoxid käme. Das Distickstoffmonoxid ist im Verfahren der Herstellung von Hydroxylamin oder Hydroxylammonium-Salzen inert. Stickstoff und Distickstoffmonoxid werden unter den Reaktionsbedingungen der Hydrierung nicht zu Hydroxylamin umgesetzt. Darüber hinaus enthält das Abgas der Hydroxylammoniumsynthese Stickstoff, der sich bei der Rückführung in den Prozess ebenfalls aufpegelt und so zu einer erheblichen Verringerung der Raum-Zeitausbeute führen würde. Das Abgas wird daher üblicherweise verbrannt, wobei die dabei frei werdende Energie zur Dampferzeugung genutzt werden kann.

Wirtschaftlich günstiger wäre es jedoch, die im Abgas enthaltenen Wertstoffe zu isolieren und in den Prozess der Herstellung von Hydroxylamin oder Hydroxylammonium-Salzen zurückzuführen.

Bei einer Rückführung von Wertstoffen in den Prozess der Herstellung von Hydroxylamin oder Hydroxylammonium-Salzen darf jedoch insbesondere das Distickstoffmonoxid, dass im Verfahren der Herstellung von Hydroxylamin oder Hydroxylammonium-Salzen inert ist nicht mit rezykliert werden, um eine Aufpegelung zu verhindern, da es sonst, wie oben beschrieben, zu zündfähigen Gemischen führt.

Im Stand der Technik sind daher Verfahren vorgeschlagen worden, bei denen das Distickstoffmonoxid aus dem Wasserstoff, Distickstoffmonoxid, Stickstoffmonoxid und Inerte enthaltenden Abgas der Hydroxylamin Synthese abgetrennt wird.

Hierfür wird beispielsweise in DE-A 032 44 370 eine Druckwechseladsorption an Molekularsieben vorgeschlagen. Nachteilig an diesem Verfahren ist, dass das Gasgemisch die aggressive Komponente Stickstoffmonoxid enthält, die ein freies Radikal ist und das Adsorptionsmaterial schnell angreift, so dass ein häufiger Austausch desselben erforderlich ist.

Die WO-A 02/30549 beschreibt ein Verfahren zur Abtrennung von Distickstoffmonoxid aus dem Abgas der Herstellung von Hydroxylamin, und zwar durch Einsatz von semipermeablen, gasdurchlässigen Membranen. Auch in diesem Verfahren bewirkt die Aggressivität des Stickstoffmonoxid eine begrenzte Stabilität der Membran und somit eine begrenzte Wirtschaftlichkeit des Verfahrens. Darüber hinaus ist mit diesem Verfahren nur eine teilweise Abtrennung von Distickstoffmonoxid möglich.

EP 1 275 616 offenbart ein Verfahren zur Herstellung von Hydroxylamin durch Reduktion von Nitrat oder Stickstoffoxid, bei dem ein Abgasstrom entsteht, der Wasserstoff und weitere gasförmige Bestandteile enthält. Aus diesem Abgasstrom wird ein Teil der weiteren gasförmigen Bestandteile abgetrennt, wodurch ein mit Wasserstoff angereichertes Gas entsteht, das erneut in die Reduktion von Nitrat oder Stickstoffoxid eingesetzt wird. Die Abtrennung der weiteren gasförmigen Bestandteile kann durch Druckwechseladsorption, durch kryogene Destillation oder mittels gasdurchlässiger Membranen erfolgen.

H. K.Lee et al.("Hydrogen separation using electrochemical method", Journal of Power Sources, 2004, Bd.132, Seiten 92 bis 98) beschreiben eine elektrochemische Methode zur Abtrennung von Wasserstoff aus einem Gemisch aus Wasserstoff, Stickstoff und Kohlendioxid.

Aufgabe der vorliegenden Erfindung ist demnach, eine Verfahren zur Aufarbeitung des Abgases aus einer Anlage zur Herstellung von Hydroxylamin oder Hydroxylammonium-Salzen durch katalytische Reduzierung von Stickstoffmonoxid mit Wasserstoff bereitzustellen, bei dem einer der im Abgas enthaltenen Wertstoffe mindestens teilweise aus dem Abgas wirtschaftlich abgetrennt werden kann.

Die Aufgabe wird gelöst durch ein Verfahren zur Aufarbeitung eines Abgases A aus einer Anlage zur Herstellung von Hydroxylamin oder Hydroxylammonium-Salzen durch katalytische Reduktion von Stickstoffmonoxid mit Wasserstoff, wobei das Abgas A Stickstoffmonoxid, Wasserstoff, .Distickstoffmonoxid, Stickstoff und Ammoniak enthält und mindestens ein Teil des im Abgas A enthaltenden Wasserstoffs aus dem Abgas A mittels einer gasdichten Membran-Elektroden-Assembly abgetrennt wird, die mindestens eine selektiv Protonen leitende Membran, eine Retentatseite, eine Permeatseite und auf jeder Seite der Membran mindestens einen Elektrodenkatalysator aufweist, wobei auf der Retentatseite der Membran mindestens ein Teil des Wasserstoffs an dem Anodenkatalysator zu Protonen oxidiert wird und die Protonen nach Durchqueren der Membran auf der Permeatseite an dem Kathodenkatalysator gemäß
I zu Wasserstoff reduziert werden und/oder
II mit Sauerstoff zu Wasser umgesetzt werden, wobei der Sauerstoff aus einem Sauerstoff enthaltenden Strom O stammt, der mit der Permeatseite in Kontakt gebracht wird.

Die im Stand der Technik beschriebenen Verfahren zur Abtrennung der im Abgas A enthaltenen Wertstoffe zielen auf die Abtrennung von Distickstoffmonoxid und eine Rückführung der restlichen Werkstoffe ab.
Es wurde überraschend gefunden, dass die Abtrennung des im Abgases A enthaltenen Wasserstoffs mittels einer gasdichten Membran-Elektroden-Assembly effektiv möglich ist. Das erfindungsgemäße Verfahren hat gegenüber den im Stand der Technik beschriebenen Verfahren den Vorteil, dass eine Abtrennung des Wertstoffes Wasserstoff ermöglicht wird. Die Triebkraft der Wasserstoffabtrennung beruht entweder auf einem Potentialunterschied zwischen den beiden Seiten der selektiv für Protonen durchlässigen Membran (Alternative I) oder auf der negativen freien Enthalpie der Reaktion von Wasserstoff und Sauerstoff zu Wasser (Alternative II). Hierdurch kann auf kostenintensive Verfahren, wie beispielsweise die Druckwechseladsorption verzichtet werden. Der Einsatz von gasdichten selektiv protonenleitenden Membranen führt zudem dazu, dass das Verfahren weitgehend unabhängig von Druckunterschieden ist, die beim Einsatz von gasdurchlässigen semipermeablen Membranen notwendig sind. Dadurch kann die Wasserstoffabtrennung bei niedrigeren Drücken und Druckunterschieden durchgeführt werden, wobei gegebenenfalls auf einen von außen aufgeprägten Druckunterschied völlig verzichtet werden kann. Hierdurch wird die mechanische Beanspruchung der Membran deutlich verringert, was zu einer Erhöhung ihrer Langzeitstabilität führt. Darüber hinaus vergrößert sich die Auswahl an für die Membran in Frage kommenden Materialien.

Die elektrochemische Abtrennung von Wasserstoff mittels einer selektiv protonenleitenden Membran ist zudem sehr effektiv. Daher kann die erforderliche Membranfläche verkleinert werden oder bei gleicher Membranfläche deutlich mehr Wasserstoff aus dem Abgas abgetrennt werden. Die im Abgas A nach Abtrennung zurückbleibende Menge an Wasserstoff ist dabei deutlich geringer als bei der Abtrennung mittels einer gasdurchlässigen semipermeablen Membran.

Wird das erfindungsgemäße Verfahren gemäß Alternative I betrieben, wird bei dem Verfahren sehr reiner Wasserstoff gewonnen. Sehr reiner Wasserstoff kann in vielen weiteren Reaktionen oder Prozessen, die auf Verunreinigungen sensibel reagieren, eingesetzt werden und stellt somit ein wertvolles Nebenprodukt dar. In einer bevorzugten Ausführungsform wird der aus dem Abgas A abgetrennte Wasserstoff erneut als Edukt in die Herstellung von Hydroxylamin oder Hydroxylammonium-Salzen eingesetzt.

Wird das erfindungsgemäße Verfahren gemäß Alternative II betrieben, wird bei dem Verfahren elektrische Energie und Wärme frei. Diese Energie kann zum Betrieb des

Verfahrens zur Herstellung von Hydroxylamin oder Hydroxylammonium-Salzen genutzt werden. Hierdurch wird die Energiebilanz des erfindungsgemäßen Verfahrens weiter verbessert.

Je nach Betriebsweise kann so vom Anwender gesteuert werden, ob mehr oder ausschließlich Wasserstoff oder mehr oder ausschließlich elektrische Energie und Wärme bei dem Verfahren gewonnen wird. Es ist auch möglich, die nach Alternative II gewonnene elektrische Energie zur Abtrennung des Wasserstoffs gemäß Alternative I einzusetzen. Hierbei wird ein kombiniertes Verfahren durchgeführt, bei dem gemäß Alternative II elektrische Energie gewonnen wird, die zur Abtrennung von Wasserstoff gemäß Alternative I verwendet wird. Die Verfahrensschritte der Wasserstoffabtrennung gemäß Alternative I und die Gewinnung von elektrischer Energie (Alternative II) können hierbei in beliebiger Reihenfolge durchgeführt werden. Hierzu kann der Abgasstrom A beispielsweise in zwei Abgasteilströme A1 und A2 aufgetrennt werden, wobei aus einem Abgasteilstrom Wasserstoff gemäß Alternative I abgetrennt wird und aus dem anderen Abgasteilstrom Wasserstoff gemäß Alternative II unter Gewinnung elektrischer Energie abgetrennt wird.

Nachfolgend wird die Erfindung ausführlich beschrieben.

### Hydroxylaminsynthese

Die großtechnische Synthese von Hydroxylamin oder Hydroxylammonium-Salzen erfolgt durch Reduktion von Stickstoffmonoxid mit Wasserstoff in saurer, wässriger Lösung. Im Rahmen der vorliegenden Erfindung werden "Herstellung von Hydroxylamin", "Herstellung von Hydroxylammonium-Salzen" und "Herstellung von Hydroxylamin oder Hydroxylammonium-Salzen" synonym gebraucht.

Zur Herstellung von 1 Mol Hydroxylammoniumsulfat (NH₃OH)₂SO₄ werden 2 Mol Stickstoffmonoxid (NO), 3 Mol Wasserstoff (H₂) und 1 Mol Schwefelsäure (H₂SO₄) in wässriger Lösung in Gegenwart eines Katalysators umgesetzt.

Als Katalysator wird üblicherweise ein Katalysator, enthaltend Platin und Graphit eingesetzt, der in einer wässrigen Lösung, enthaltend Schwefelsäure suspendiert ist. Gegebenenfalls können dem Katalysator Zusatzstoffe wie beispielsweise Promotoren zugesetzt werden.

Die wässrige Lösung, in der der Katalysator suspendiert ist, enthält im Allgemeinen Schwefelsäure in Konzentrationen im Bereich von 5 bis 50 Vol.-%, bevorzugt 10 bis 30 Vol.-%, mehr bevorzugt 15-25 Vol.-%, jeweils bezogen auf das Gesamtvolumen der wässrigen Lösung.

Die Umsetzung von Wasserstoff und Stickstoffmonoxid wird im allgemeinen bei Temperaturen im Bereich von 0 bis 100 °C, bevorzugt im Bereich von 10 bis 70 °C, mehr bevorzugt im Bereich von 30 bis 60 °C und insbesondere bevorzugt im Bereich von 40 bis 50 °C durchgeführt.

Hierzu wird ein Eduktstrom E, enthaltend Stickstoffmonoxid und Wasserstoff, in einen Rührkessel, der die wässrige Lösung und den darin suspendierten Katalysator enthält eingeleitet. Die Umsetzung von Wasserstoff und Stickstoffmonoxid erfolgt am suspendierten Katalysator in der wässrigen Lösung, wobei sofort Hydroxylammoniumsulfat gebildet wird. Das entstehende Hydroxylammoniumsulfat ist in der wässrigen Lösung gelöst. Es ist auch möglich, mehrere Rührkessel zu einer Rührkesselkaskade hintereinander anzuordnen. Im Allgemeinen werden 2 bis 20, bevorzugt 4 bis 15, mehr bevorzugt 4 bis 10 und insbesondere bevorzugt 5 bis 8 Rührkessel zu einer Rührkesselkaskade angeordnet. Für den Fall, dass die Reaktion in einer Rührkesselkaskade durchgeführt wird, erfolgt eine Aufkonzentrierung des Hydroxylammoniumsulfats durch den fortschreitenden Umsatz in der Rührkesselkaskade. Die wässrige Lösung, welche den letzten Rührkessel der Rührkesselkaskade verlässt, hat im Allgemeinen Hydroxylammmoniumsulfat-Konzentrationen im Bereich von 5 bis 50 Gew.-%, bevorzugt 10 bis 40 Gew.-%, mehr bevorzugt 15 bis 35 Gew.-%, insbesondere bevorzugt 20 bis 30 Gew.-%, jeweils bezogen auf das Gesamtgewicht der wässrigen Lösung.

Das Hydroxylammoniumsulfat kann in einem nachgelagerten Schritt durch dem Fachmann bekannte Verfahren zu Hydroxylamin und Schwefelsäure gespalten werden.

Der Abgasstrom A, der den Rührkessel, beziehungsweise die Rührkesselkaskade verlässt, enthält im Allgemeinen 60 bis 80 Vol.-% Wasserstoff, 5 bis 10 Vol.-% Stickstoffmonoxid, 5 bis 10 Vol.-% Distickstoffmonoxid und 0 bis 40 Vol.-% weitere Bestandteile wie beispielsweise Stickstoff und Ammoniak.

### Wasserstoffabtrennung

Erfindungsgemäß wird mindestens ein Teil des im Abgas A enthaltenen Wasserstoffs elektrochemisch mittels einer gasdichten Membran-Elektroden-Assembly abgetrennt, wobei der abzutrennende Wasserstoff in Form von Protonen durch die Membran transportiert wird. Hierzu wird das Abgas A, welches den Rührkessel bzw. die Rührkesselkaskade verlässt durch eine Vorrichtung geleitet, die mindestens eine MEA enthält. Als Membran-Elektroden-Assembly (MEA) werden die Elektroden mit der dazwischen angeordneten Membran bezeichnet. Erfindungsgemäß weist die gasdichte MEA mindestens eine selektiv protonenleitende Membran auf.

Aus dem Abgas A, welches den Rührkessel bzw. die Rührkesselkaskade verlässt, können gegebenenfalls ein oder mehrere weitere Wertstoffe abgetrennt werden. Die Abtrennung ein oder mehrerer weiterer Wertstoffe kann vor und/oder nach der Abtrennung von dem Wertstoff Wasserstoff erfolgen. Es ist auch möglich, dass zeitgleich mit der Abtrennung von Wasserstoff ein oder mehrere weitere Werkstoffe abgetrennt werden.

Die Abtrennung ein oder mehrerer weiterer Werkstoffe aus dem Abgas A kann nach allgemein bekannten, dem Fachmann geläufigen Methoden erfolgen, beispielsweise durch Kondensation, Destillation oder Extraktion. Die Wahl des Druck- und Temperaturbereichs richtet sich nach den physikalischen Eigenschaften der aufzutrennenden Verbindungen und ist dem Fachmann bekannt.

Die MEA ist vorzugsweise als Platte oder als Rohr ausgebildet, wobei die üblichen, aus dem Stand der Technik zur Auftrennung von Gasgemischen bekannten Membrananordnungen verwendet werden können.

Das Abgas A wird auf einer Seite der Membran entlang geführt. Diese Seite wird im Folgenden Retentatseite genannt. Die andere Seite der Membran wird im Folgenden als Permeatseite bezeichnet. Auf der Permeatseite wird der gemäß Alternative I entstandene Wasserstoff und/oder das gemäß Alternative II entstandene Wasser abgeführt. Die Membran weist auf jeder Seite mindestens einen Elektrodenkatalysator auf, wobei im Rahmen dieser Beschreibung der auf der Retentatseite befindliche Elektrodenkatalysator als Anodenkatalysator und der auf der Permeatseite befindliche Elektrodenkatalysator als Kathodenkatalysator bezeichnet wird. Auf der Retentatseite wird der Wasserstoff am Anodenkatalysator zu Protonen oxidiert, diese durchqueren die Membran und werden auf der Permeatseite am Kathodenkatalysator zu Wasserstoff reduziert (Alternative I) oder mit Sauerstoff zu Wasser umgesetzt (Alternative II). Gemäß Alternative II wird dazu an der Permeatseite ein Sauerstoff enthaltender Strom O entlanggeführt und mit der Permeatseite in Kontakt gebracht.

Der Sauerstoff enthaltende Strom O enthält mindestens 15 Vol-% Sauerstoff. Insbesondere bevorzugt wird als Sauerstoff enthaltender Strom O Luft eingesetzt.

Bei Alternative I muss für den Transport der Protonen durch die Membran elektrische Energie aufgewendet werden, die durch Anlegen einer Gleichspannung an die beiden Seiten der Membran mittels Elektroden zugeführt wird. Bei Alternative II entsteht elektrische Energie.

In einer bevorzugten Ausführungsform wird das Abgas A direkt eingesetzt. Direkt bedeutet in diesem Zusammenhang, dass das Abgas A unmittelbar, ohne vorherige Reinigung oder Aufarbeitung in dem erfindungsgemäßen Verfahren eingesetzt wird.

Der gemäß Alternative I erhaltene Wasserstoff weist eine hohe Reinheit auf. Er kann gesammelt und verkauft oder zur Energieerzeugung verwendet werden. Aufgrund der hohen Reinheit kann der Wasserstoff auch in weiteren chemischen Reaktionen oder Prozessen eingesetzt werden, die sensibel auf Verunreinigungen reagieren. Bei dem Verfahren gemäß Alternative II wird Wärme und elektrische Energie frei. Die Wärme kann beispielsweise zum Heizen der Reaktion eingesetzt werden, in der das Abgas A gebildet wird. In einer bevorzugten Ausführungsform wird der Wasserstoff erneut in die katalytische Reduktion von Stickstoffmonoxid mit Wasserstoff zur Herstellung von Hydroxylammoniumsulfat eingesetzt. Der abgetrennte Wasserstoff kann dabei direkt in den Rührkessel bzw. die Rührkesselkaskade, d.h. ohne weitere Aufarbeitung, zurückgeführt werden. Es ist auch möglich, den Wasserstoff weiteren Aufarbeitungsschritten zu unterziehen. Die Rückführung des Wasserstoffs kann dabei über eine separate Zuleitung zum Rührkessel bzw. der Rührkesselkaskade erfolgen. Es ist auch möglich, den Wasserstoff dem Eduktstrom E zuzumischen. In einer bevorzugten Ausführungsform wird der abgetrennte Wasserstoff dem Eduktstrom E zugemischt.

Um einen guten Kontakt der Membran mit dem auf der Retentatseite befindlichen Wasserstoff und einen guten Abtransport des abgetrennten Wasserstoffs bzw. des Wassers auf der Permeatseite zu gewährleisten, sind die Elektrodenschichten üblicherweise mit elektrisch leitfähigen Gasverteilerschichten kontaktiert. Diese sind zum Beispiel Platten mit einer gitterartigen Oberflächenstruktur aus einem System feiner Kanäle oder Schichten aus porösem elektrisch leitfähigem Material wie Vlies, Gewebe oder Kohlenstoffpapier. Die Gesamtheit von Gasverteilerschicht und Elektrodenschicht wird im Allgemeinen als Gasdiffusionselektrode (GDE) bezeichnet. Durch die Gasverteilerschicht wird der abzutrennende Wasserstoff auf der Retentatseite nahe an die Membran und den Anodenkatalysator geführt und auf der Permeatseite der Abtransport des gebildeten Wasserstoffs beziehungsweise Wassers erleichtert.

Die erfindungsgemäß eingesetzte MEA ist gasdicht, das heißt sie weist praktisch keine Porosität auf, durch die Gase in atomarer oder molekularer Form von einer Seite auf die andere Seite der MEA gelangen können, noch weist sie Mechanismen auf, durch die Gase unselektiv beispielsweise durch Adsorption, Lösung in der Membran, Diffusion und Desorption durch die MEA transportiert werden können. Gasdicht im Rahmen der vorliegenden Erfindung bedeutet, dass von der Gesamtmenge des gemäß Alternative I in Form von Wasserstoff oder gemäß Alternative II in Form von Wasser abgetrennten Wasserstoffs mindestens 95 %, bevorzugt mindestens 97 %, mehr bevorzugt mindestens 98 % und insbesondere bevorzugt mindestens 99,5 % die Membran in Form von Protonen durchquert.

Die erfindungsgemäß eingesetzte Membran leitet selektiv Protonen, das heißt insbesondere, dass sie nicht elektronenleitend ist. Im erfindungsgemäßen Verfahren können als protonenleitende Membran prinzipiell alle Materialien eingesetzt werden, die im Stand der Technik als Membranmaterial für Brennstoffzellen eingesetzt werden.

Für den Transport der Protonen durch die Membran muss gemäß Alternative I elektrische Energie aufgewendet werden, die durch Anlegen einer Gleichspannung an die beiden Seiten der Membran mittels Elektroden zugeführt wird.

Die Abtrennung des Wasserstoffs gemäß Alternative I wird demnach durch die Ausbildung eines Potentialunterschiedes zwischen den beiden Seiten der Membran durch Anlegen einer Spannung herbeigeführt. Die Abtrennung wird bei Spannungen von 0,05 bis 2000 mV, bevorzugt von 100 bis 900 mV, besonders bevorzugt von 100 bis 800 mV, gemessen gegen eine Wasserstoffreferenzelektrode (RHE) durchgeführt. Im Allgemeinen erfolgt die Abtrennung des Wasserstoffs bei Stromdichten im Bereich von 0,1 bis 2,0 A/cm².

Gemäß Alternative II wird auf der Permeatseite der Membran ein Sauerstoff enthaltender Strom O entlanggeführt. Gemäß Alternative II reagieren auf der Permeatseite die Protonen am Kathodenkatalysator mit dem Sauerstoff zu Wasser. Die treibende Kraft ist die Reduktion des Sauerstoffs. Bei der Gesamtreaktion wird Energie in Form von Wärme und durch Zwischenschalten eines Verbrauchers in Form von elektrischem Strom frei.

Die Abtrennung des Wasserstoffs nach dem erfindungsgemäßen Verfahren kann sowohl gemäß Variante I als auch gemäß Variante II bei Temperaturen von 0 bis 1000 °C durchgeführt werden.

Die Wahl des geeigneten Temperaturbereichs richtet sich dabei maßgeblich nach dem eingesetzten Membranmaterial. Beim Einsatz von Polymermembranen a) erfolgt die Wasserstoffabtrennung im Allgemeinen bei Temperaturen im Bereich von 0 bis 100 °C, bevorzugt im Bereich von 20 bis 100 °C, besonders bevorzugt im Bereich von 60 bis 100 °C und insbesondere bevorzugt im Bereich von 70 bis 90 °C. Beim Einsatz von Polymermembranen a) ist es auch möglich, die Wasserstoffabtrennung bei Temperaturen im Bereich von 20 bis 120 °C, bevorzugt im Bereich von 20 bis 110 °C durchzuführen.

Beim Einsatz von PAFC(Phosphoric Acid Fuel Cell)-Membranen b) erfolgt die Wasserstoffabtrennung im Allgemeinen bei Temperaturen im Bereich von 100 °C bis 200 °C.

Beim Einsatz keramischen Membranen c) erfolgt die Wasserstoffabtrennung im Allgemeinen bei Temperaturen im Bereich von 200 °C bis 1000 °C.

Die Abtrennung des Wasserstoffs nach dem erfindungsgemäßen Verfahrens wird vorzugsweise bei Drücken von 0,5 bis 10 bar, bevorzugt von 1 bis 6 bar, besonders bevorzugt von 1 bis 3 bar, insbesondere bei Atmosphärendruck vorgenommen. Gemäß einer bevorzugten Ausführungsform der Erfindung liegt der Druckunterschied zwischen der Retentat- und der Permeatseite der Membran unter 1 bar, bevorzugt unter 0,5 bar, besonders bevorzugt besteht kein Druckunterschied.

Bei der Wasserstoffabtrennung gemäß Alternative I ist es zudem möglich, den Wasserstoff auf der Permeatseite zu komprimieren. Dies ist dann der Fall, wenn der Wasserstoff auf der Permeatseite nicht abgeleitet wird. Die Kompression kommt dadurch zustande, dass der Wasserstoff durch die Ausbildung eines Potentialunterschiedes aus dem Abgas A durch die MEA auf die Permeatseite transportiert wird. Mit dem erfindungsgemäßen Verfahren kann auf der Permeatseite ein Druck von bis zu 50 bar, bevorzugt bis zu 15 bar und insbesondere bevorzugt bis zu 10 bar aufgebaut werden.

Erfindungsgemäß wird mindestens ein Teil des im Abgas A enthaltenen Wasserstoffs abgetrennt. Im Allgemeinen werden mindestens 10 %, bevorzugt mindestens 50 %, besonders bevorzugt mindestens 70 %, ganz besonders bevorzugt mindestens 95 % und insbesondere bevorzugt mindestens 98 % abgetrennt.

Der auf der Permeatseite gemäß Alternative I erhaltene Wasserstoff enthält höchstens 5 Mol-%, bevorzugt höchstens 2 Mol-% und besonders bevorzugt höchstens 1 Mol-% Verunreinigungen wie Stickstoffmonoxid, Distickstoffmonoxid, Stickstoff und Ammoniak.

Der auf der Permeatseite gemäß Alternative I erhaltene Wasserstoff enthält höchstens 5 Vol-%, bevorzugt höchstens 2 Vol-% und besonders bevorzugt höchstens 1 Vol-% Verunreinigungen wie Stickstoffmonoxid, Distickstoffmonoxid, Stickstoff und Ammoniak.

Der Wasserstoff kann je nach verwendeter selektiv protonenleitender Membran bis zu 60 Vol-%, bevorzugt bis zu 10 Vol-%, besonders bevorzugt bis zu 2 Vol-% Wasser enthalten. Die Gegenwart von Wasser ist bei einigen Membrantypen, zum Beispiel bei bestimmten Polymermembranen zur Befeuchtung der Polymermembran erforderlich.

Die elektrochemische Abtrennung des Wasserstoffs findet erfindungsgemäß außerhalb des Rührkessels bzw. der Rührkesselkaskade, in der die Herstellung von Hydroxylamin durchgeführt wird, statt.

Gemäß einer bevorzugten Ausführungsform wird die Abtrennung des Wasserstoffs aus dem Abgas A in einem Reaktor durchgeführt, der mit mindestens einer gasdichten MEA ausgestattet ist. Die Abtrennung kann in einer Ausführungsform beispielsweise in einem Reaktor, dessen Außenwände zumindest teilweise aus gasdichten MEAs gebildet sind, durchgeführt werden.

Der Wasserstoff kann erfindungsgemäß nach Alternative I, nach Alternative II oder nach beiden Alternativen abgetrennt werden. Letzteres bedeutet, dass mindestens ein Teil des Wasserstoffs als Wasserstoff und mindestens ein Teil des Wasserstoffs unter Erzeugung von elektrischer Energie als Wasser erhalten wird. Wie viel des im Abgas A enthaltenen Wasserstoffs jeweils nach Alternative I und II abgetrennt wird, kann vom Anwender nach Bedarf angepasst werden. Gemäß einer bevorzugten Ausführungsform der Erfindung wird bei der Abtrennung des Wasserstoffs nach Alternative I und II mindestens so viel Wasserstoff gemäß Alternative II abgetrennt, dass der dabei erzeugte Strom ausreicht, um den Energiebedarf für die Wasserstoffabtrennung gemäß Alternative I zu decken.

Wird der Wasserstoff aus dem Abgas A gemäß beiden Alternativen I und II abgetrennt, so wird dies immer räumlich getrennt durchgeführt, da bei Gegenwart von Sauerstoff auf der Permeatseite üblicherweise die Protonen direkt zu Wasser reagieren. Das Abgas A kann beispielsweise nacheinander zunächst an einer MEA entlang geleitet werden, die auf der Permeatseite mit einem Strom O in Kontakt steht, so dass ein Teil des Wasserstoffs als Wasser abgetrennt wird. Anschließend wird das Abgas A an einer MEA entlang geführt, an die eine Spannung angelegt ist, so dass der Wasserstoff als Wasserstoff abgetrennt wird. Die räumliche Trennung zwischen den beiden Alternativen I und II kann auch darin bestehen, dass das Abgas A zwischen zwei beispielsweise sich gegenüberliegenden Membranen hindurchgeleitet wird, von denen eine auf der Permeatseite mit einem Strom O in Kontakt steht und an die andere eine Spannung angelegt wird.

Der abgetrennte Wasserstoff kann vor der Weiterverwendung noch getrocknet werden, dies wird insbesondere durchgeführt, wenn die Abtrennung durch eine Polymermembran erfolgt, die befeuchtet werden muss.

### Elektrodenkatalysatoren:

Zur Abtrennung des Wasserstoffs aus dem Abgas A können alle dem Fachmann bekannten Elektrodenkatalysatoren eingesetzt werden.

Die Funktion von Elektrodenkatalysators wird z. B. in Journal of Power Sources 177 (2008), 478-484, K.A. Perry, G.A. Eisman, B.C. Benicewicz "Electrochemical hydrogen pumping using a high-temperature polybenzimidazole (PBI) membrane" beschrieben.

Um einen guten Kontakt der Membran mit dem auf der Retentatseite befindlichen Wasserstoff und einen guten Abtransport des abgetrennten Wasserstoffs auf der Permeatseite zu gewährleisten, sind die Elektrodenschichten üblicherweise mit Gasverteilerschichten kontaktiert. Diese sind zum Beispiel Platten mit einer gitterartigen Oberflächenstruktur aus einem System feiner Kanäle oder Schichten aus porösem Material wie Vlies, Gewebe oder Papier. Die Gesamtheit von Gasverteilerschicht und Elektrodenschicht wird im Allgemeinen als Gasdiffusionselektrode (GDE) bezeichnet. Durch die Gasverteilerschicht wird der abzutrennende Wasserstoff auf der Retentatseite nahe an die Membran und den Anodenkatalysator geführt und auf der Permeatseite der Abtransport des gebildeten Wasserstoffs erleichtert.

Je nach Ausführungsform der Erfindung kann die Anode gleichzeitig auch als Anodenkatalysator und die Kathode gleichzeitig auch als Kathodenkatalysator dienen. Es können jedoch auch jeweils unterschiedliche Materialien für die Anode und den Anodenkatalysator bzw. die Kathode und den Kathodenkatalysator verwendet werden.

Als Elektrodenkatalysatormaterial können die üblichen, dem Fachmann bekannten Verbindungen und Elemente verwendet werden, die die Dissoziation von molekularem Wasserstoff in atomaren Wasserstoff, die Oxidation von Wasserstoff zu Protonen sowie die Reduktion von Protonen zu Wasserstoff katalysieren können. Geeignet sind beispielsweise Pd, Pt, Cu, Ni, Ru, Fe, Co, Cr, Mn, V, W, Wolframcarbid, Mo, Molybdäncarbid, Zr, Rh, Ag, Ir, Au, Re, Y, Nb sowie Legierungen und Mischungen davon, bevorzugt sind erfindungsgemäß Pd, Pt und Ni. Die vorstehend als Elektrodenkatalysatormaterial genannten Elemente und Verbindungen können auch geträgert vorliegen, bevorzugt wird dabei Kohlenstoff als Träger eingesetzt.

Gemäß einer bevorzugten Ausführungsform der vorliegenden Erfindung werden bevorzugt Kohlenstoff als leitendes Material enthaltende Elektroden verwendet. Dabei wird der Kohlenstoff und ein Elektrodenkatalysator bevorzugt auf einem porösen Träger wie Vlies, Gewebe oder Papier aufgebracht. Der Kohlenstoff kann dabei mit dem Katalysator vermischt oder zunächst der Kohlenstoff und anschließend der Katalysator aufgebracht werden. Besonders bevorzugt ist der Einsatz von Platin auf Kohlenstoff für die Anode und die Kathode.

Gemäß einer weiteren Ausführungsform der Erfindung wird das als Elektrode eingesetzte elektrisch leitende Material und der Elektrodenkatalysator direkt auf der Membran aufgebracht.

### Membranen:

Die Membran ist vorzugsweise als Platte oder als Rohr ausgebildet, wobei die üblichen, aus dem Stand der Technik zur Auftrennung von Gasgemischen bekannten Membrananordnungen verwendet werden können.

Die erfindungsgemäß eingesetzte MEA ist gasdicht, das heißt sie weist praktisch keine Porosität auf, durch die Gase in atomarer oder molekularer Form von einer Seite auf die andere Seite der MEA gelangen können, noch weist sie Mechanismen auf, durch die Gase unselektiv beispielsweise durch Adsorption, Lösung in der Membran, Diffusion und Desorption durch die MEA transportiert werden können. Die Dichtigkeit der Membran-Elektroden-Assembly (MEA) kann entweder durch eine gasdichte Membran, durch eine gasdichte Elektrode, oder einen gasdichten Elektrodenkatalysator sowie durch eine Kombination davon gewährleistet werden. So kann als gasdichte Elektrode zum Beispiel eine dünne metallische Folie verwendet werden, beispielsweise eine Pd-, Pd-Ag- oder Pd-Cu-Folie. Der Einsatz von Metallfolien hat zudem den Vorteil, dass die protonenleitende Membran vor aggressiven Bestandteilen des Abgases A, wie Stickstoffmonoxid und Ammoniak geschützt wird. Weiterhin leitet die erfindungsgemäß eingesetzte Membran selektiv Protonen, das heißt insbesondere, dass sie nicht elektronenleitend ist.

Erfindungsgemäß können für die Membranen alle dem Fachmann bekannten Materialien eingesetzt werden, aus denen sich selektiv protonenleitende Membranen formen lassen. Hierzu gehören beispielsweise die von J. W. Phair und S. P. S. Badwal in lonics (2006) 12, Seiten 103 - 115 aufgeführten Materialien. Auch selektiv protonenleitende Membranen, wie sie aus der Brennstoffzellentechnik bekannt sind, können erfindungsgemäß verwendet werden.

Die Membranmaterialien können dabei nach drei Leitungsmechanismen unterschieden werden:
a) Polymermembranen. Wird als Membran eine Polymermembran eingesetzt, wird angenommen, dass der Protonentransport nach dem Grotthuß-Mechanismus erfolgt und/oder durch den Transport von Hydroxonium-Ionen erfolgt. D.h. die Polymermembran enthält hierbei funktionelle Gruppen, die Hydroxonium-Ionen (H₃O⁺-Ionen) reversibel binden können. Insbesondere bevorzugt ist hierbei der Einsatz von mit Wasser gequollenen Polymermembranen. Es wird angenommen, dass der Transport der Protonen durch die Membran hierbei durch das Umklappen von Wasserstoffbrückenbindungen zwischen dem in der Polymermembran enthaltenen Wasser und den in der Polymermembran enthaltenen reversible gebundenen Hydroxonium-Ionen erfolgt. Weiter wird angenommen, dass darüber hinaus auch ein Transport der Protonen in Form von Hydroxonium-Ionen erfolgt, die sich durch die Polymermembran bewegen.
b) PAFC(Phosphoric Acid Fuel Cell)-Membranen. Wird als Membran eine PAFC-Membran eingesetzt, enthält die Membran eine Trägersubstanz und Phosphorsäure (H₃PO₄). Phosphorsäure dient bei diesem Membrantyp als Elektrolyt. Es wird angenommen, dass in den PAFC-Membranen der Protonentransport dem Grotthuß-Mechanismus folgt.
c) Keramische Membranen. Wird als Membran eine keramische Membran eingesetzt, enthält diese anorganische Materialien, die bei den Temperaturen der Wasserstoffabtrennung Fehlstellen enthalten. Der Transport der Protonen durch die Membran erfolgt hierbei über die Fehlstellen in der keramischen Membran.

Beispielsweise können die nachfolgenden keramischen Membranen c) wie bestimmte Heteropolysäuren wie H₃Sb₃B₂O₁₄ · 10H₂O, H₂Ti₄O₉ · 12H₂O und HSbP₂O₈· 10 H₂O; saure Zirkoniumsilikate, -phosphate und -phosphonate in Schichtstruktur wie K₂ZrSi₃O₉, K₂ZrSi₃O₉, alpha-Zr(HPO₄)₂ ·nH20, gamma-Zr(PO₄)-(H₂PO₄) · 2H₂O, alpha- und gamma-Zr-Sulfophenylphosphonat oder Sulfoarylphosphonat; nicht geschichtete Oxidhydrate wie Antimonsäure (Sb₂O₅ ·2H₂O), V₂O₅ ·nH₂O, ZrO₂ ·nH₂O, SnO₂ · nH₂O und Ce(HPO₄)₂ · nH₂O eingesetzt werden. Weiterhin können Oxosäuren und Salze, die zum Beispiel Sulfat-, Selenat-, Phosphat-, Arsenat-, Nitrat-Gruppen usw. enthalten, verwendet werden. Besonders geeignet sind Oxoanionensysteme auf Basis von Phosphaten oder komplexen Heteropolysäuren wie Polyphosphatgläser, Aluminiumpolyphosphat, Ammoniumpolyphosphat und Polyphosphatzusammensetzungen wie NH₄PO₃/(NH₄)₂SiP₄O₁₃ und NH₄PO₃/TiP₂O₇. Weiterhin sind oxidische Materialien einsetzbar, wie Brownmillerite, Fluorite und Phosphate mit Apatitstruktur, Pyrochlor-Mineralien und Perovskite. Generell können alle protonenleitenden Materialien, wie z.B. auch Zeolithe, Alumosilikate, xAl₂O₃(1-x)SiO₂, SnP₂O₇, Sn_{1-X}In_{X}P₂O₇ (X = 0.0 - 0.2), eingesetzt werden.

Perovskite weisen die Grundformel AB₁₋ₓMₓO_{3-y} auf, wobei M ein trivalentes Seltenerdenelement ist, das zur Dotierung dient, und y den Sauerstoffmangel im Perovskitoxid-Gitter bezeichnet. A kann beispielsweise ausgewählt werden aus Mg, Ca, Sr und Ba. B kann unter anderem ausgewählt werden aus Ce, Zr und Ti. Für A, B und M können auch unabhängig voneinander verschiedene Elemente aus den jeweiligen Gruppen gewählt werden.

Weiterhin können strukturell als keramische Membranen c) modifizierte Gläser eingesetzt werden wie Chalcogenid-Gläser, PbO-SiO2, BaO-SiO2 und CaO-SiO2. Darüber hinaus sind geeignete protonenleitende Keramiken und Oxide beispielsweise in Solid State lonics 125, (1999), 271-278; Journal of Power Sources 180, (2008), 15-22; lonics 12, (2006), 103-115; Journal of Power Sources 179 (2008) 92-95; Journal of Power Sources 176 (2008) 122-127 und Electrochemistry Communications 10 (2008) 1005-1007 beschrieben.

Weitere Beispiele für protonenleitende Keramiken c) und Oxide sind SrCeO3, BaCeO₃, Yb:SrCeO₃, Nd:BaCeO₃, Gd:BaCeO₃, Sm:BaCeO₃, BaCaNdO₉, Y:BaCeO₃, Y:BaZrCeO₃, Pr-dotiertes Y:BaCeO₃, Gd:BaCeO₃, BaCe_{0,9}Y_{0,1}O_{2,95} (BYC), SrCe_{0,95}Yb_{0,05}O_{3-α}, BaCe_{0,9}Nd_{0,10}O_{3-α}, CaZr_{0,96}In_{0,04}O_{3-α}, (α bezeichnet die Anzahl der Sauerstofffehlstellen pro Formeleinheit des Oxides vom Perowskittyp); Sr-dotiertes La₃P₃O₉, Sr-dotiertes LaPO₄, BaCe_{0,9}Y_{0,1}O_{3-α} (BCY), BaZr_{0,9}Y_{0,1}O_{3-α} (BZY), Ba3Ca_{1,18}Nb_{1,82}O_{8,73} (BCN18), (La-_{1,95}Ca_{0,05})Zr₂O_{7-α}, La₂Ce₂O₇, Eu₂Zr₂O₇, H₂S/(B₂S₃ oder Ga₂S₃)/GeS₂, SiS₂, As₂S₃ oder Csl; BaCe_{0,8}Gd_{0,2}O_{3-α} (BCGO); Gd-dotierte BaCeO₃ wie BaCe_{0,85}Y_{0,15}O_{3-α} (BCY15) und BaCe_{0,8}Sm_{0,2}O_{3-α}, xAl₂O₃(1-x)SiO₂, SnP₂O₇, Sn₁₋XInXP2O7 (x = 0.0 - 0.2).

Eine weitere Klasse Materialien, die sich für die Herstellung von gasdichten und selektiv protonenleitenden Membranen eignen, sind Polymermembranen a). Geeignete Polymere zur Herstellung von Polymermembranen a) sind beispielsweise sulfonierte Polyetheretherketone (S-PEEK), sulfonierte Polyethersulfone (S-PES), sulfonierte Polybenzoimidazole (S-PBI) und sulfonierte teilfluorierte oder perfluorierte Kohlenwasserstoffpolymere wie beispielsweise NAFION^{®} (Fa. Du Pont). Weiterhin können teilfluorierte oder perflurierte Polysulfonsäuren, Polymere auf Styrolbasis, Poly(arylenether), Polyimide und Polyphosphazene eingesetzt werden. Geeignete Trägermaterialien sind ausgewählt aus der Gruppe bestehend aus Polybenzimidazol, Teflon und Siliziumcarbid. Als Trägermaterial bevorzugt ist Polybenzimidazol.

Als PAFC-Membranen b) können alle dem Fachmann bekannten Trägermaterialien eingesetzt werden, die in Kombination mit Phosphorsäure als Elektrolyt selektiv protonenleitend sind. Beispielsweise können Polybenzamidazol-Membranen eingesetzt werden, die auf Polybenzimidazol und Phosphorsäure basieren, wie sie beispielsweise unter dem Namen Celtec-P® von der BASF SE vertrieben werden. Darüber hinaus können beispielsweise PAFC-Membranen auf Basis von Teflon oder Siliziumcarbid (SiC) eingesetzt werden.

In einer bevorzugten Ausführungsform werden Polymermembranen a) eingesetzt.

Bei Verwendung von Polymermembranen werden diese üblicherweise durch die Gegenwart von Wasser auf mindestens einer Seite der Membran befeuchtet. Hierzu wird auf mindestens einer Seite der Membran ein Gasstrom bereitgestellt, der 0,5 bis 60 Vol.-% Wasser enthält. Auf der Anodenseite (Retentatseite) kann dem Abgas A Wasser zugesetzt werden. Es ist auch möglich, die Reaktionsbedingungen bei der Herstellung von Hydroxylamin oder Hydroxylammonium-Salzen so einzustellen, dass das Abgas A herstellungsbedingt genügend Wasser enthält.

Die Erfindung wird durch die nachfolgenden Beispiele verdeutlicht, ohne sie hierauf zu beschränken.

### Beispiele

### a) Wasserstoffabtrennung in einer 50 cm²-Brennstoffzelle (Celtec-P 1000 Membran)

In einer 50 cm²-Brennstoffzelle wird ein MEA, enthaltend Gasdiffusionselektroden (Anode und Kathode), und einer Celtec-P 1000 Standard Membran eingesetzt. Der Aufbau der Brennstoffzelle ist dem Fachmann bekannt. Dabei wird die MEA zwischen sogenannten Strömungsfeldern positioniert, welche als Stromableiter (bzw. als Kontakte) sowie für die Gaszufuhr dienen. Gleichzeitig erfolgt ein Verpressen über Endplatten, mit welchen ein definierter Druck auf die Strömungsfelder eingestellt werden kann. Das Verpressen ist vor allem für eine gute Kontaktierung innerhalb der elektrochemischen Zelle notwendig. Die Gasdiffusionselektroden haben eine Katalysatorbeladung von 1 mg Pt pro cm² und weisen eine Katalysatorschichtdicke von 30 bis 150 µm auf. Als Membran wird eine Celtec-P Standard Membran verwendet. Für den Vorgang der Wasserstoffabtrennung wird ein Gemisch (Zusammensetzung bezogen auf trockenes Gas) aus Wasserstoff (70 %), Stickstoffmonoxid (8 %), Distickstoffmonoxid (8 %) und Stickstoff (14 %) in die Gaszufuhr des Anoden-Strömungsfeldes geleitet. Der Gasstrom beträgt 500 ml/min und wird vor dem Einlass in das Anoden-Strömungsfeld mit Wasser bzw. Wasserdampf gesättigt. Der Wasserstoff reagiert an der Anode nach folgender Gleichung H₂→ 2H⁺ + 2e-. Die gebildeten Protonen gelangen über die protonenleitende Membran zur Kathode, an welcher die Rückreaktion 2H⁺ + 2e⁻ → H₂ durch Reduktion der Protonen erfolgt. Der Kathodengasstrom ist ebenfalls mit Wasser bzw. Wasserdampf gesättigt, um ein Austrocknen der Polymermembran zu verhindern. Die Reaktion findet bei einer Zelltemperatur von 160 °C statt. Die maximale Stromdichte beträgt 1,5 A/cm². Der Einsatz dieser elektrochemischen Zelle ermöglicht die Kompression des abgetrennten Wasserstoffs.

### b) Wasserstoffabtrennung in einer 50 cm²-Brennstoffzelle (Nafion 112 Membran)

In einer 50 cm²-Brennstoffzelle wird eine MEA enthaltend Gasdiffusionselektroden (Anode und Kathode) und Nafion 112 Membran eingesetzt. Dabei wird der Membranelektrodenaufbau zwischen sogenannten Strömungsfeldern positioniert, welche als Stromableiter (bzw. als Kontakte) sowie für die Gaszufuhr dienen. Gleichzeitig erfolgt ein Verpressen über Endplatten, mit welchen ein definierter Druck auf die Strömungsfelder eingestellt werden kann. Das Verpressen ist vor allem für eine gute Kontaktierung innerhalb der elektrochemischen Zelle notwendig. Die Gasdiffusionselektroden haben eine Katalysatorbeladung von 1 mg Pt pro cm² und weisen eine Katalysatorschichtdicke von 80 bis 120 µm auf. Als Membran wird eine Nafion 112 Membran verwendet. Für den Vorgang der Wasserstoffabtrennung wird ein Gemisch (Zusammensetzung bezogen auf trockenes Gas) aus Wasserstoff (70%), Stickstoffmonoxid (8%), Distickstoffmonoxid (8%) und Stickstoff (14%) in die Gaszufuhr des Anoden-Strömungsfeldes geleitet. Der Gasstrom beträgt 500 ml/min und wird vor dem Einlass in das Anoden-Strömungsfeld mit Wasser bzw. Wasserdampf gesättigt. Der Wasserstoff reagiert an der Anode nach folgender Gleichung H₂ → 2H⁺ + 2e⁻. Die gebildeten Protonen gelangen über die protonenleitende Membran zur Kathode, an welcher die Rückreaktion 2H⁺ + 2e⁻ → H₂ durch Reduktion der Protonen erfolgt. Der Kathodengasstrom ist ebenfalls mit Wasser bzw. Wasserdampf gesättigt, um ein Austrocknen der Polymermembran zu verhindern. Die Reaktion findet bei einer Zelltemperatur von 70 °C statt. Die maximale Stromdichte beträgt 2 A/cm². Der Einsatz dieser elektrochemischen Zelle ermöglicht die Kompression des abgetrennten Wasserstoffs.

## Patentansprüche

1. Verfahren zur Aufarbeitung eines Abgases A aus einer Anlage zur Herstellung von Hydroxylamin oder Hydroxylammonium-Salzen durch katalytische Reduktion von Stickstoffmonoxid mit Wasserstoff, wobei das Abgas A Stickstoffmonoxid, Wasserstoff, Distickstoffmonoxid, Stickstoff und Ammoniak enthält und mindestens ein Teil des im Abgas A enthaltenen Wasserstoffs aus dem Abgas A mittels einer gasdichten Membran-Elektroden-Assembly abgetrennt wird, die mindestens eine selektiv protonenleitende Membran, eine Retentatseite, eine Permeatseite und auf jeder Seite der Membran mindestens einen Elektrodenkatalysator aufweist, wobei auf der Retentatseite der Membran mindestens ein Teil des Wasserstoffs an dem Anodenkatalysator zu Protonen oxidiert wird und die Protonen nach Durchqueren der Membran auf der Permeatseite an dem Kathodenkatalysator gemäß
I zu Wasserstoff reduziert werden und/oder
II mit Sauerstoff zu Wasser umgesetzt werden, wobei der Sauerstoff aus einem Sauerstoff enthaltenden Strom O stammt, der mit der Permeatseite in Kontakt gebracht wird.

2. Verfahren gemäß Anspruch 1, **dadurch gekennzeichnet, dass** bei gleichzeitiger Abtrennung des Wasserstoffs gemäß I und II mindestens ein Teil des bei II erzeugten Stroms in I eingesetzt wird.

3. Verfahren gemäß Anspruch 1 oder 2, **dadurch gekennzeichnet, dass** bei Abtrennung des Wasserstoffs gemäß II mindestens ein Teil der bei II entstehenden Wärme der Anlage zur Herstellung von Hydroxylamin oder Hydroxylammonium-Salzen zugeführt wird.

4. Verfahren gemäß einem der Ansprüche 1 bis 3, **dadurch gekennzeichnet, dass** der Wasserstoff gemäß I unter Anlegen einer Spannung von 0,05 bis 2000 mV gegenüber einer Wasserstoff-Referenzelektrode abgetrennt wird.

5. Verfahren gemäß einem der Ansprüche 1 bis 4, **dadurch gekennzeichnet, dass** der Sauerstoff enthaltende Strom O mindestens 15 Vol-% Sauerstoff enthält.

6. Verfahren gemäß einem der Ansprüche 1 bis 5, **dadurch gekennzeichnet, dass** als Sauerstoff enthaltender Strom O Luft eingesetzt wird.

7. Verfahren gemäß einem der Ansprüche 1 bis 6, **dadurch gekennzeichnet, dass** die Elektroden der Membran-Elektroden-Assembly als Gasdiffusionselektroden ausgestaltet sind.

8. Verfahren gemäß einem der Ansprüche 1 bis 7, **dadurch gekennzeichnet, dass** als selektiv protonenleitende Membran eine Polymermembran a) eingesetzt wird.

9. Verfahren gemäß einem der Ansprüche 1 bis 7, **dadurch gekennzeichnet, dass** als selektiv protonenleitende Membran eine Membran b) eingesetzt wird, die eine Trägersubstanz und Phosphorsäure enthält.

10. Verfahren gemäß Anspruch 9, **dadurch gekennzeichnet, dass** die Membran ein Trägermaterial ausgewählt aus der Gruppe bestehend aus Polybenzimidazol, Teflon und Siliziumcarbid enthält.

11. Verfahren gemäß einem der Ansprüche 1 bis 7, **dadurch gekennzeichnet, dass** als selektiv protonenleitende Membran eine keramische Membran c) eingesetzt wird.

12. Verfahren gemäß einem der Ansprüche 1 bis 8, **dadurch gekennzeichnet, dass** als selektiv protonenleitende Membran teil- oder perfluorierte Kohlenwasserstoffpolymere eingesetzt werden.

13. Verfahren gemäß einem der Ansprüche 1 bis 8, **dadurch gekennzeichnet, dass** als selektiv protonenleitende Polymermembran sulfonierte Polyetheretherketone (S-PEEK) eingesetzt werden.

14. Verfahren gemäß einem der Ansprüche 1 bis 10, **dadurch gekennzeichnet, dass** der Wasserstoff bei Temperaturen im Bereich von 0 bis 200 °C abgetrennt wird.

15. Verfahren gemäß einem der Ansprüche 1 bis 8, **dadurch gekennzeichnet, dass** der Wasserstoff bei Temperaturen im Bereich von 70 bis 90 °C abgetrennt wird.

## Claims

1. A process for working up an exhaust gas A from a system for producing hydroxylamine or hydroxylammonium salts by catalytic reduction of nitrogen monoxide with hydrogen, wherein the exhaust gas A comprises nitrogen monoxide, hydrogen, dinitrogen monoxide, nitrogen and ammonia, and at least some of the hydrogen present in the exhaust gas A is separated off from the exhaust gas A by means of a gas-tight membrane-electrode assembly which comprises at least one selectively proton-conducting membrane, a retentate side, a permeate side, and, on each side of the membrane, at least one electrode catalyst, wherein, on the retentate side of the membrane, at least some of the hydrogen is oxidized to protons at the anode catalyst and the protons, after crossing the membrane, are, on the permeate side, at the cathode catalyst according to
I reduced to hydrogen and/or
II reacted with oxygen to form water, wherein the oxygen originates from an oxygen-comprising stream 0 which is contacted with the permeate side.

2. The process according to claim 1, wherein, in the case of simultaneous separation of the hydrogen according to I and II, at least some of the stream generated in II is used in I.

3. The process according to claim 1 or 2, wherein, in the case of separation of the hydrogen according to II, at least some of the heat formed in II is fed to the system for producing hydroxylamine or hydroxylammonium salts.

4. The process according to any one of claims 1 to 3, wherein, according to I, the hydrogen is separated by applying a voltage of from 0.05 to 2000 mV over a hydrogen reference electrode.

5. The process according to any one of claims 1 to 4, wherein the oxygen-comprising stream 0 comprises at least 15% by volume of oxygen.

6. The process according to any one of claims 1 to 5, wherein air is used as oxygen-comprising stream 0.

7. The process according to any one of claims 1 to 6, wherein the electrodes of the membrane-electrode assembly are designed as gas-diffusion electrodes.

8. The process according to any one of claims 1 to 7, wherein a polymer membrane a) is used as selectively proton-conducting membrane.

9. The process according to any one of claims 1 to 7, wherein a membrane b) which comprises a support substance and phosphoric acid is used as selectively proton-conducting membrane.

10. The process according to claim 9, wherein the membrane comprises a support material selected from the group consisting of polybenzimidazole, Teflon and silicon carbide.

11. The process according to any one of claims 1 to 7, wherein a ceramic membrane c) is used as selectively proton-conducting membrane.

12. The process according to any one of claims 1 to 8, wherein partially fluorinated or perfluorinated hydrocarbon polymers are used as selectively proton-conducting membrane.

13. The process according to any one of claims 1 to 8, wherein sulfonated polyether ether ketones (S-PEEK) are used as selectively proton-conducting polymer membrane.

14. The process according to any one of claims 1 to 10, wherein the hydrogen is separated off at temperatures in the range from 0 to 200°C.

15. The process according to any one of claims 1 to 8, wherein the hydrogen is separated off at temperatures in the range from 70 to 90°C.

## Revendications

1. Procédé de traitement d'un gaz d'échappement A provenant d'une installation de production d'hydroxylamine ou de sels d'hydroxylammonium par réduction catalytique de monoxyde d'azote avec de l'hydrogène, le gaz d'échappement A contenant du monoxyde d'azote, de l'hydrogène, du monoxyde de diazote, de l'azote et de l'ammoniac, et au moins une partie de l'hydrogène contenu dans le gaz d'échappement A étant séparé du gaz d'échappement A au moyen d'un ensemble membrane-électrodes étanche aux gaz, qui comprend au moins une membrane conductrice de protons sélective, un côté rétentat, un côté perméat et au moins un catalyseur d'électrode de chaque côté de la membrane, au moins une partie de l'hydrogène étant oxydé en protons sur le catalyseur d'anode du côté rétentat de la membrane et, du côté perméat sur le catalyseur de cathode, après passage au travers de la membrane, les protons étant selon
I réduits en hydrogène et/ou
II transformés en eau avec de l'oxygène, l'oxygène provenant d'un courant 0 contenant de l'oxygène qui est mis en contact avec le côté perméat.

2. Procédé selon la revendication 1, **caractérisé en ce qu'**au moins une partie du courant généré en II est utilisée en I avec séparation simultanée de l'hydrogène selon I et II.

3. Procédé selon la revendication 1 ou 2, **caractérisé en ce que**, lors de la séparation de l'hydrogène selon II, au moins une partie de la chaleur formée en II est introduite dans l'installation de production d'hydroxylamine ou de sels d'hydroxylammonium.

4. Procédé selon l'une quelconque des revendications 1 à 3, **caractérisé en ce que** l'hydrogène est séparé selon I par application d'une tension de 0,05 à 2 000 mV par rapport à une électrode de référence à hydrogène.

5. Procédé selon l'une quelconque des revendications 1 à 4, **caractérisé en ce que** le courant 0 contenant de l'oxygène contient au moins 15 % en volume d'oxygène.

6. Procédé selon l'une quelconque des revendications 1 à 5, **caractérisé en ce que** de l'air est utilisé en tant que courant 0 contenant de l'oxygène.

7. Procédé selon l'une quelconque des revendications 1 à 6, **caractérisé en ce que** les électrodes de l'ensemble membrane-électrodes sont configurées sous la forme d'électrodes à diffusion de gaz.

8. Procédé selon l'une quelconque des revendications 1 à 7, **caractérisé en ce qu'**une membrane polymère a) est utilisée en tant que membrane conductrice de protons sélective.

9. Procédé selon l'une quelconque des revendications 1 à 7, **caractérisé en ce qu'**une membrane b) contenant une substance support et de l'acide phosphorique est utilisée en tant que membrane conductrice de protons sélective.

10. Procédé selon la revendication 9, **caractérisé en ce que** la membrane contient un matériau support choisi dans le groupe constitué par le polybenzimidazole, le Téflon et le carbure de silicium.

11. Procédé selon l'une quelconque des revendications 1 à 7, **caractérisé en ce qu'**une membrane céramique c) est utilisée en tant que membrane conductrice de protons sélective.

12. Procédé selon l'une quelconque des revendications 1 à 8, **caractérisé en ce que** des polymères hydrocarbonés partiellement ou perfluorés sont utilisés en tant que membrane conductrice de protons sélective.

13. Procédé selon l'une quelconque des revendications 1 à 8, **caractérisé en ce que** des polyéther-éther-cétones sulfonées (S-PEEK) sont utilisées en tant que membrane polymère conductrice de protons sélective.

14. Procédé selon l'une quelconque des revendications 1 à 10, **caractérisé en ce que** l'hydrogène est séparé à des températures dans la plage allant de 0 à 200 °C.

15. Procédé selon l'une quelconque des revendications 1 à 8, **caractérisé en ce que** l'hydrogène est séparé à des températures dans la plage allant de 70 à 90 °C.
